# EUROPEAN PATENT APPLICATION

(11) **EP 4 761 254 A1**
(43) Date of publication of application: **17.06.2026**
(21) Application number: 24851016.6
(22) Date of filing: 06.08.2024
(51) Int. Cl.: H04N 21/472

(54) **SPECIAL EFFECT GENERATION METHOD AND APPARATUS, AND ELECTRONIC DEVICE AND STORAGE MEDIUM**

(30) Priority: 07.08.2023 CN 202310988684
(71) Applicant: Beijing Zitiao Network Technology Co., Ltd., Beijing 100190 (CN)
(72) Inventor: YOU, Zhehao, Beijing 100028 (CN); ZHANG, Nuomeng, Beijing 100028 (CN); BAI, Xiaoshuang, Beijing 100028 (CN)
(74) Representative: Grünecker Patent- und Rechtsanwälte PartG mbB
(86) International application number: PCT/CN2024/110197
(87) International publication number: WO 2025/031371

(57) **Abstract**

The embodiment of the disclosure provides methods, apparatuses, electronic devices and storage medium for generating effect. The method includes: displaying an effect editing interface comprising a style area for inputting effect style information and a description area for inputting at least one piece of effect keyword information; creating and generating, in response to an effect generation operation, a first effect according to target effect style information and target effect keyword information, the target effect style information being effect style information inputted by a current user in the style area, and the target effect keyword information being effect keyword information inputted by the current user in the description area. With above technical solution, the ways for creating effects can be enriched in the embodiments of the disclosure.

## Description

This application claims priority to Chinese Patent Application No. 202310988684.X, filed on Aug. 7, 2023 and entitled "METHOD, APPARATUS, ELECTRONIC DEVICE AND STORAGE MEDIUM FOR GENERATING EFFECT", the entire content of which is incorporated herein by reference.

### FIELD

Embodiments of the present disclosure relate to the field of computer technologies, and in particular, to methods, apparatuses, electronic devices, and a storage medium for generating an effect.

### BACKGROUND

In the prior art, the user may only apply the effect provided by the video platform for work creation. However, the type of effect provided by the video platform is limited, which cannot meet the user's creation needs.

### SUMMARY

The embodiment of the disclosure provides a method, an apparatus, an electronic device and a storage medium for generating an effect, and provides the user with the capability of creating and posting effects and meets the creation requirements of users.

According to a first aspect, an embodiment of the present disclosure provides a method for generating an effect, comprising: displaying an effect editing interface comprising a style area for inputting effect style information and a description area for inputting at least one piece of effect keyword information; creating and generating, in response to an effect generation operation, a first effect according to target effect style information and target effect keyword information, the target effect style information being effect style information inputted by a current user in the style area, and the target effect keyword information being effect keyword information inputted by the current user in the description area.

According to a second aspect, an embodiment of this disclosure provides an apparatus for generating an effect, comprising: a first interface display module configured to display an effect editing interface comprising a style area for inputting effect style information and a description area for inputting at least one piece of effect keyword information; an effect generation module configured to create and generate, in response to an effect generation operation, a first effect according to target effect style information and target effect keyword information, the target effect style information being effect style information inputted by a current user in the style area, and the target effect keyword information being effect keyword information inputted by the current user in the description area.

According to a third aspect, an embodiment of this disclosure provides an electronic device, comprising: one or more processors; a memory storing one or more programs that, when executed by the one or more processors, causes the one or more processor to perform the method for generating an effect according to embodiments of this disclosure.

According to a fourth aspect, an embodiment of this disclosure provides a computer-readable storage medium storing a computer program thereon, the program, when executed by a processor, performing the method for generating an effect according to embodiments of this disclosure.

According to a fifth aspect, an embodiment of this disclosure provides a computer program product tangibly stored in a computer storage medium and comprising computer-executable instructions that, when executed by a device, cause the device to perform the method for generating an effect according to embodiments of this disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and components and elements are not necessarily drawn to scale.
FIG. 1 is a schematic flowchart of the method for generating an effect according to an embodiment of the present disclosure;
FIG. 2 is a schematic diagram of displaying an effect editing interface according to an embodiment of the disclosure;
FIG. 3 is a schematic diagram of displaying a preset effect presentation interface according to an embodiment of the disclosure;
FIG. 4 is a schematic diagram of displaying an effect keyword input area according to an embodiment of the disclosure;
FIG. 5 is a schematic flowchart of another method for generating an effect according to an embodiment of the disclosure;
FIG. 6 is a schematic diagram of displaying a media content editing interface according to an embodiment of the disclosure;
FIG. 7 is a structural block diagram of an apparatus for generating an effect according to an embodiment of the disclosure;
FIG. 8 is a schematic structural diagram of an electronic device according to an embodiment of the present disclosure.

### DETAILED DESCRIPTION

The embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein. On the contrary, those embodiments are provided for the thorough and complete understanding of the present disclosure. It should be understood that the drawings and embodiments of the present disclosure are only used for illustration, rather than limiting the protection scope of the present disclosure.

It should be understood that various steps described in the method implementations of the present disclosure may be performed in different orders, and/or in parallel. Further, the method implementations may include additional steps and/or omit the illustrated steps. The scope of the present disclosure is not limited in this regard.

As used herein, the term "comprise" and variants thereof are to be read as open terms that mean "include, but is not limited to". The term "based on" is to be read as "based at least in part on". The term "one embodiment" means "at least one embodiment", the term "another embodiment" means "at least one another embodiment", the term "some embodiments" means "at least some embodiments". The relevant definitions of other terms will be given below.

It should be noted that the concepts of "first", "second" and the like mentioned in this disclosure are merely used to distinguish between different apparatuses, modules, or units, rather than limiting the order or interdependence of functions performed by the apparatuses, modules, or units.

It should be noted that the modification of "one" and "more" mentioned in this disclosure are examples but not limiting, and should be understood as "one or more" to those skilled in the art, unless otherwise specified.

The names of messages or information exchanged between a plurality of apparatuses in implementations of the present disclosure are used for illustrative purposes only and are not intended to limit the scope of such messages or information.

It can be understood that, before the technical solutions disclosed in the embodiments of the present disclosure are used, the types, the usage scope, the usage scenario and the like of personal information related to the present disclosure should be notified to the user in an appropriate manner according to the relevant laws and regulations and the authorization of the user should be obtained.

For example, in response to receiving an active request from a user, a prompt information is sent to the user to explicitly prompt the user that the operation requested by the user will need to obtain and use the user's personal information. Thus, users may autonomously select whether to provide personal information to the software or the hardware such as an electronic device, an application, a server or a storage medium that perform the operation of the technical solution of the present disclosure according to the prompt information.

As an optional but non-restrictive implementation, in response to receiving an active request from a user, the way of sending prompt information to the user may be, for example, a pop-up window in which prompt information may be presented in text. In addition, pop-up windows may also contain selection controls for users to choose "agree" or "disagree" to provide personal information to electronic devices.

It will be appreciated that the above process of notification and acquisition of user authorization are only schematic and do not limit the implementations of the present disclosure. Other methods that meet relevant laws and regulations may also be applied to the implementation of the present disclosure.

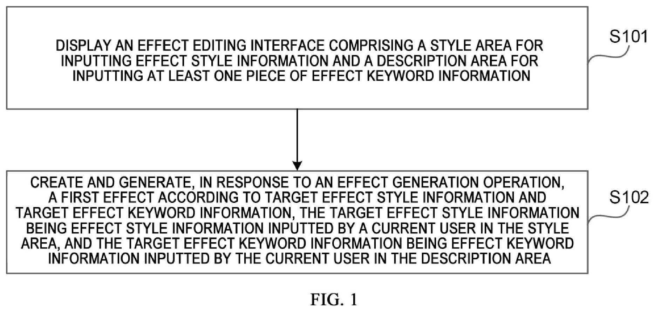

FIG. 1 is a schematic flowchart of a method for generating an effect according to an embodiment of the present disclosure. The method may be performed by an apparatus for generating an effect. The apparatus may be implemented by software and/or hardware, may be disposed in an electronic device, and is typically configured in a mobile phone or a tablet. The method for generating an effect provided by the embodiment of the disclosure is suitable for a scene in which an effect is created and posted, for example, a scene in which an effect is created and posted in a video application. As shown in FIG. 1, the method for generating an effect provided in this embodiment may comprise the following steps.

S101: displaying an effect editing interface comprising a style area for inputting effect style information and a description area for inputting at least one piece of effect keyword information.

The effect editing interface may be an interface for editing an effect, and supports the user to create and generate a new effect. The type of effect created and generated by user with the support of the effect editing interface is not limited. For example, the user may be supported to generate one or more types of effects, such as an artificial intelligence (AI) effect, a beauty effect, a makeup effect, or the like. The following takes an AI effect as an example for description. The AI effect may be used to perform image processing on a person image to obtain a stylized image.

The effect editing interface may include a style area and a description area. In the style area, the user may input the effect style information of the effect to be created, and in the description area, the user may input the effect keyword information of the effect to be created. The ways for inputting the effect style information and the effect keyword information are not limited, for example, they may be inputted through keyboard or by selecting certain displayed and to-be-selected effect style information or effect keyword information.

The effect style information may be understood as style information of effects, such as cartoon style, vintage style, and the like. The effect keyword information may be understood as keyword information describing the effect, for example, keyword information describing an attribute of the effect or an attribute of a certain part of the effect. It may be understood that, after effect style information is determined by the user, the effect model corresponding to the effect style information may be determined. When effect keyword information is determined by the user, the effect model may be adjusted based on the effect keyword information. After the user completes the creation of the effect, the effect model corresponding to the newly created effect is determined.

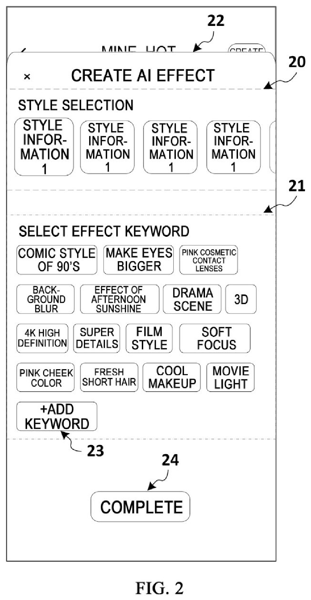

Specifically, as shown in FIG. 2 (an example in which the effect editing interface is used to create and generate the AI effect), the effect editing interface including the style area 20 and the description area 21 may be displayed, so that the current user may create and generate a new effect in the effect editing interface.

The ways for displaying the effect editing interface 22 are not limited, for example, the effect editing interface 22 may be displayed in the form of a panel (as shown in FIG. 2) or a floating window; or the effect editing interface 22 may be displayed in the form of a page, the specific way may be set as needed.

As shown in FIG. 2, the style area 20 may be displayed with an effect style input area or a style information addition control (not shown in FIG. 2) for triggering display of the effect style input area, and/or with one or more effect style information for the user to select. The description area 21 may be displayed with an effect keyword input area (not shown in FIG. 2) or a keyword addition control 23 for triggering display of the effect keyword input area, and/or with one or more effect keyword information for the user to select.

For example, different effect style information may correspond to different effect models, and different effect models may be used to create effects with different style attributes. For example, when the effect keywords are different, parameter values of at least part of the processing parameters of the effect model are different. When the effect style information is different and/or the effect keywords are different, the created effects are different.

In this embodiment, the presentation position of the effect creation entry for triggering the display of the effect creation interface is not limited. For example, the effect creation entry may be presented in the capturing interface, the preset effect presentation interface, and/or the detail interface of the effect. In this case, optionally, displaying the effect editing interface comprises: displaying the effect editing interface in response to an effect creation operation for an effect creation entry, the effect creation entry presented in a capturing interface, a preset effect presentation interface for presenting effect information of at least one effect, or a detail interface of a second effect.

The effect creation operation may be a triggering operation used to instruct to display an effect editing interface to create an effect in the effect editing interface. The effect creation operation may be applied to the effect creation entry, and the effect creation entry may be presented in the capturing interface, the preset effect presentation interface, and/or the second preset effect presentation interface.

The preset effect presentation interface may be used to present effect information of at least one effect. Optionally, the effect information comprises at least one of poster information, an effect name, effect keyword information, and effect usage information. The poster information of an effect may be considered as related information of a poster of the effect, for example, a nickname and/or an avatar of the poster. The effect usage information of an effect may be considered as information for describing a usage status of the effect, such as the number of times the effect is used or the number of people who apply the effect. The at least one effect may include an effect provided by the platform and/or an effect posted by a user in the platform. The second effect and the first effect may be different.

Specifically, when the capturing interface or the preset effect presentation interface or the effect detail interface is displayed, the effect creation entry may be displayed in the capturing interface or the preset effect presentation interface or the effect detail page. When it is detected that the current user triggers the presented effect creation entry, the effect editing interface is displayed for the current user to create and generate a new effect in the effect editing interface.

In an optional implementation, the effect creation entry may be presented in the capturing interface. Therefore, when it is detected that the current user triggers the effect creation entry displayed in the capturing interface, the effect editing interface may be displayed. In another optional implementation, after entering the capturing interface, the user may select a target capturing mode. Then, in the target capturing mode, the effect creation entry is presented.

In an optional implementation, the effect creation entry may be presented in the preset effect presentation interface. For example, a media content presentation page may be displayed, and a capturing control is displayed in the media content presentation page, for example, a capturing control is presented which corresponds to an effect used for currently presented media content in the media content presentation page. When it is detected that the current user triggers the capturing control, the current page may be switched from the media content presentation page to the capturing interface. In addition, when the capturing control triggered by the user has a corresponding effect, the preview of the effect may be further displayed in the capturing interface. When it is detected that the current user selects the intelligent creation mode in the capturing interface, for example, when it is detected that the current user triggers the intelligent creation control presented in the capturing interface, the preset effect presentation interface may be displayed, and the effect creation entry is presented in the preset effect presentation interface. When it is detected that the current user triggers the effect creation entry, the effect editing interface is displayed.

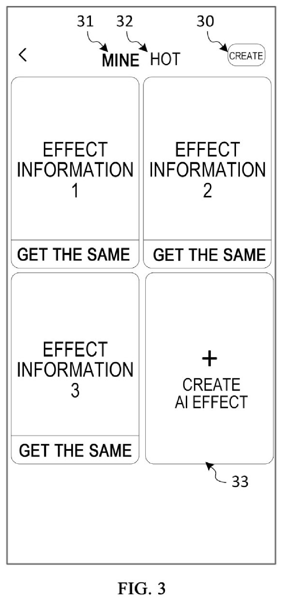

FIG. 3 is a schematic diagram of displaying a preset effect presentation interface according to an embodiment of the present disclosure. As shown in FIG. 3, the preset effect presentation interface may present effect information of at least one effect and a first effect creation entry 30. In addition, the preset effect presentation interface may further display a first identifier 31 and a second identifier 32. The first identifier 31 may be used to trigger to present the effect information of the effect created by the current user in the preset effect presentation interface. At this time, the second effect creation entry 33 may be further presented in the preset effect creation interface. The second identifier 32 may be used to trigger to present the effect information of the recommended effect in the preset effect presentation interface.

In an optional implementation, the effect creation entry may be presented in a detail page of the effect. For example, when a detail page presentation operation of a current user for an effect is received, a detail page of the effect may be presented. The details information of the effect is displayed in the detail page, and an effect creation entry may be further presented in the detail page. Therefore, when it is detected that the current user triggers the effect creation entry, the effect editing interface may be displayed.

In some implementations, after displaying the effect editing interface, the method further comprises: displaying, in response to an addition operation for effect keyword information on the effect editing interface, an effect keyword input area for the current user to input effect keyword information; additionally presenting, in response to an input completion operation, the effect keyword information inputted by the current user in the description area.

In some embodiments, the effect keyword input area may be an area for a user to enter effect keyword information through keyboard, and the keyboard may be a virtual keyboard or a non-virtual keyboard. The effect keyword information addition operation may be an operation for instructing to display an effect keyword area, for example, an operation for triggering a keyword addition control displayed in the effect editing interface. The input completion operation may be an operation for indicating that the keyword input is completed, for example, an operation for triggering an input completion control or a button on a keyboard.

In the foregoing implementation, the effect keyword input area may be displayed in response to the triggering operation of the user, that is, when the user needs to input the effect keyword information through keyboard, the effect keyword input area is displayed, to simplify the content presented in the effect editing interface.

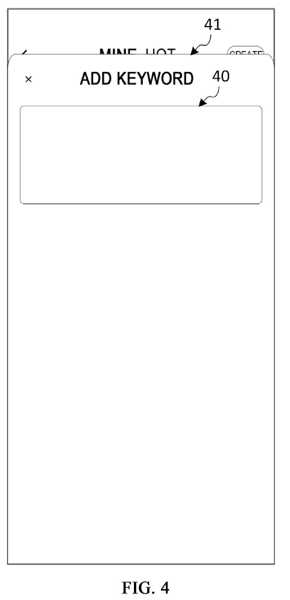

Specifically, when receiving the addition operation for effect keyword information, the current application may display the effect keyword input area 40. For example, when it is detected that the current user triggers the keyword adding control 23 (as shown in FIG. 2) displayed in the effect editing interface, it may be determined that the addition operation for effect keyword information is received. In response to the addition operation for effect keyword information, the effect keyword input area 40 is displayed in the effect editing interface or the keyword adding interface 41 (as shown in FIG. 4).

Therefore, the current user may input the effect description content in the effect keyword input area 40, for example, input one or more effect keyword information, or input one or more effect description statements. Further, an input completion operation is performed when the input is completed.

Correspondingly, when detecting that the current user performs the input completion operation, the current application may additionally present the effect keyword information corresponding to the effect description content inputted by the current user in the description area of the effect editing interface.

In some implementations, after displaying the effect editing interface, the method further comprises: obtaining effect keyword information in response to an input operation on an effect keyword input area in the effect editing interface; additionally presenting the obtained effect keyword information in the description area.

In the above implementation, when the effect editing interface is displayed, the effect keyword input area is displayed in the effect editing interface. In such a way, the user can directly input the effect keyword information in the effect keyword input area, thereby the operation for the user to input the effect keyword information may be simplified.

Specifically, when the input operation of the current user in the effect keyword input area of the effect editing interface is received, the characters inputted by the current user may be presented in the effect keyword input area. When the current user completes the input, the effect description information inputted by the current user in the effect keyword input area is acquired, and the effect keyword information corresponding to the effect description content inputted by the current user is additionally presented in the description area.

In some implementations, the user may not be required to input only one keyword each time and/or input in the form of a keyword, for example, the user may be supported to input multiple keywords in the effect keyword input area, and/or the user may be supported to input one or more effect description sentences in the effect keyword input area. Therefore, when the user completes the input, the effect description content inputted by the user may be obtained. The tokenization is performed on the effect description content, and the at least one piece of keyword information obtained by the tokenization is used as the effect keyword information. In this case, optionally, before additionally presenting the effect keyword information inputted by the current user in the description area, the method comprises: obtaining effect description content inputted by the current user in the keyword input area; performing tokenization on the effect description content to obtain at least one piece of keyword information as the effect keyword information.

In the foregoing implementation, the manner of performing tokenization on the effect description content is not limited, and optionally, performing the tokenization on the effect description content comprises: performing the tokenization on the effect description content based on semantic analysis; and/or performing the tokenization on the effect description content based on a preset separator. That is, tokenization may be performed on the effect description content based on the semantic analysis and/or the preset separator. For example, tokenization may be performed on the effect description content based on semantics of the natural language analysis, and/or tokenization may be performed on the effect description content based on preset separators such as spaces, commas, and/or slight-pause mark.

In the above implementation, the user may select the effect keyword information of the effect that the user wants to create. In other words, the effect keyword information in the selected state may be used as the effect keyword information of the effect that the user wants to create. In this case, when the obtained effect keyword information is additionally presented in the description area, the obtained effect keyword information may be presented as in a selected state or an unselected state, which may be specifically set as needed.

Considering that the effect description content inputted by the user in the effect keyword input area is usually the effect description content to be selected by the user, optionally, when the obtained effect keyword information is additionally presented in the description area, the obtained effect keyword information may be presented as in the selected state, so as to further simplify the operation required by the user in the effect creation process. At this time, additionally presenting the obtained effect keyword information in the description area comprises: additionally presenting the at least one piece of effect keyword information obtained based on the effect description content in the description area, and presenting the at least one piece of effect keyword information as in a selected state.

S102: creating and generating, in response to an effect generation operation, a first effect according to target effect style information and target effect keyword information, the target effect style information being effect style information inputted by a current user in the style area, and the target effect keyword information being effect keyword information inputted by the current user in the description area.

The effect generation operation may be a triggering operation for instructing to create and generate a new effect, for example, an operation for triggering a completion control displayed in the effect editing interface or other gesture operations. In response to the effect generation operation, the newly created effect model is determined. The first effect may be considered as an effect created and generated in response to the effect generation operation. The target effect style information may be effect style information that is inputted by the current user in the style area of the effect editing interface when the effect generation operation is received, such as effect style information in the selected state in the style area when the effect generation operation is received. The target effect keyword information may be effect keyword information inputted by the current user in the description area of the effect editing interface when the effect generation operation is received, such as effect keyword information in the selected state in the description area when the effect generation operation is received.

For example, when the effect generation operation is received, for example, when it is detected that the current user triggers the completion control 24 (as shown in FIG. 2) in the effect editing interface, the target effect style information inputted by the current user in the style area and the target effect keyword information inputted by the current user in the description area may be obtained, and the first effect is generated based on the target effect style information and the target effect keyword information.

In this embodiment, after creating and generating the first effect, the current user may post the created first effect in the current application. After the first effect is posted, the user (including the first user and the user other than the first user) in the current application may apply the first effect posted by the first user.

In some implementations, after creating and generating the first effect, the current user may post the first effect. For example, the current user may separately post the first effect, or post the first effect with the created media content. In this case, optionally, after creating and generating the first effect according to the target effect style information and the target effect keyword information, the method further comprises at least one of: posting the first effect in a current application in response to a first posting operation for the first effect; posting, in response to a second posting operation for target media content, the target media content and the first effect in the current application, an image of the target media content obtained from processing that applies the first effect created by the current user.

The first posting operation may be a triggering operation for instructing to post the first effect and not to instruct to post the media content. The second posting operation may be a triggering operation for instructing to post the first effect and the media content. The first posting operation and the second posting operation may be different triggering operations. The specific execution manners of the first posting operation and the second posting operation are not limited. The target media content may be media content obtained from processing that applies the first effect, for example, the media content obtained and posted from the processing that applies the first effect after the current user creates the first effect.

For example, when the first posting operation for the first effect is received, the first effect may be posted in the current application; and/or when the second posting operation for the target media content obtained from the processing that applies the first effect is received, the target media content and the first effect may be posted in the current application, to enrich the posting manner of the first effect, and meet different posting requirements of the user.

According to the method for generating an effect in this embodiment, an effect editing interface is displayed. The effect editing interface comprises a style area for inputting effect style information and a description area for inputting at least one piece of effect keyword information. In response to an effect generation operation, a first effect is created and generated according to target effect style information and target effect keyword information, wherein the target effect style information is effect style information inputted by a current user in the style area, and the target effect keyword information is effect keyword information inputted by the current user in the description area. With the above technical solution in this embodiment, the user is supported to create an effect by inputting the effect style information and the effect keyword information. Thus, the creation ways of the effect can be enriched, the personalized use requirement of the user on the effect is met, and the media content authoring experience of the user is improved.

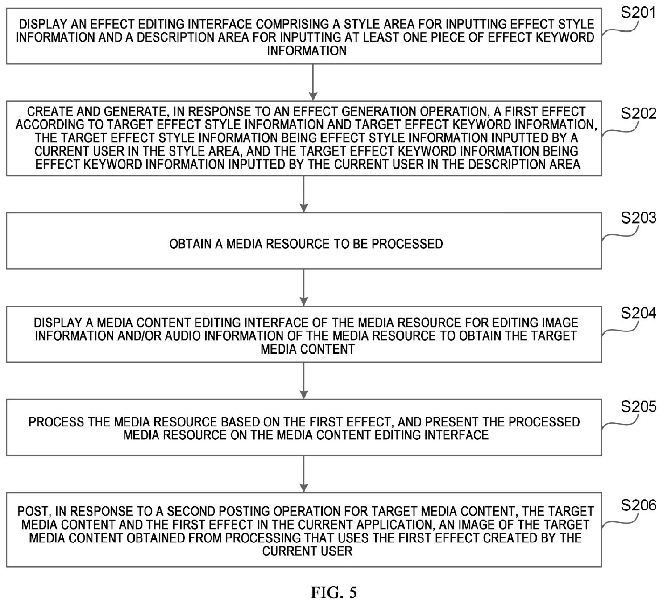

FIG. 5 is a schematic flowchart of another method for generating an effect according to an embodiment of the present disclosure. The solution in this embodiment may be combined with one or more optional solutions in the foregoing embodiments. Optionally, before posting the target media content and the first effect in the current application in response to the second posting operation for the target media content, the method further comprises: obtaining a media resource to be processed; displaying a media content editing interface of the media resource for editing image information and/or audio information of the media resource to obtain the target media content; processing the media resource based on the first effect, and presenting the processed media resource on the media content editing interface.

Correspondingly, as shown in FIG. 5, the method for generating an effect provided in this embodiment may comprise the following steps.

S201: displaying an effect editing interface comprising a style area for inputting effect style information and a description area for inputting at least one piece of effect keyword information.

S202: creating and generating, in response to an effect generation operation, a first effect according to target effect style information and target effect keyword information, the target effect style information being effect style information inputted by a current user in the style area, and the target effect keyword information being effect keyword information inputted by the current user in the description area.

S203: obtaining a media resource to be processed.

The media resource to be processed may be understood as a media resource used to be process by applying the first effect to generate the target media content. The media resource may include, for example, content captured by the current user in the capturing interface, and/or media content material selected by the current user in the material uploading interface. The material uploading interface may be a page for uploading media content material, for example, a local album interface of the current user.

In this embodiment, after the first effect is created and generated, the media resource to be processed may be obtained. For example, the capturing interface may be displayed, and the media resource to be processed is captured based on the capturing operation of the current user in the capturing interface. Alternatively, the material uploading interface is displayed, and the media content material selected by the current user is considered as the media resource to be processed based on the material selection of the current user in the material uploading interface.

S204: displaying a media content editing interface of the media resource for editing image information and/or audio information of the media resource to obtain the target media content.

In this embodiment, after obtaining the media resource to be processed, the media content editing interface of the obtained media resource may be displayed. Thus, the current user edits the image information and/or the audio information of the media resource to obtain the target media content to be posted.

The image information of the media resource may be related information of an image of the media resource, for example, a sticker added in the image, a filter effect added in the image, and/or a size of the image. Optionally, the image information comprises effect adjustment information generated when the image of the media resource is processed by applying the first effect, and the effect adjustment information comprises a plurality of candidate effects and/or a control for effect intensity adjustment.

The effect adjustment information may be understood as information that adjusts a processing effect of the first effect, for example, a plurality of candidate effects and/or a control for effect intensity adjustment controls of the first effect. For example, the plurality of candidate effects may be understood as different processing effects of the first effect. For example, different candidate effects may correspond to different processing intensities of image, different color intensities, different stylization intensities, and the like. Optionally, the plurality of candidate effects are presented in a form of thumbnails of the corresponding preview images. For example, the candidate effect may be presented in the form of a thumbnail of a preview image corresponding to the candidate effect. The control for effect intensity adjustment may be understood as a control for adjusting the effect intensity of the first effect.

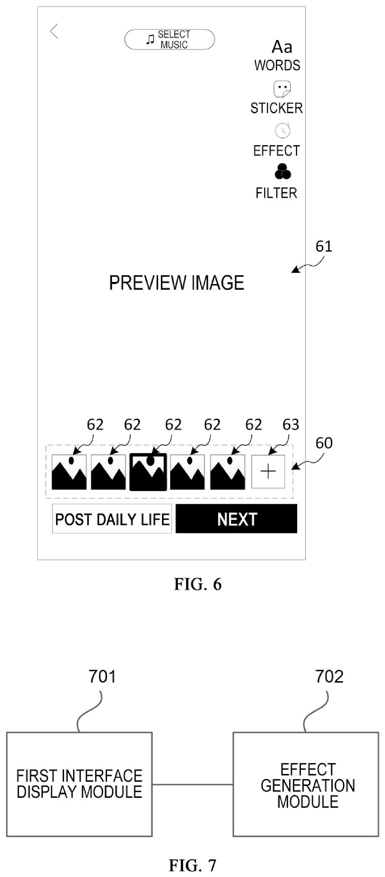

The plurality of candidate effects of the first effect is not limited in the display position in the media content editing interface. Optionally, as shown in FIG. 6, the media content editing interface comprises a first area 60 for presenting the plurality of candidate effects and/or the control for effect intensity adjustment (not shown in FIG. 6), and a second area 62 for presenting a preview image corresponding to the target effect. That is, when the media content editing interface is displayed, the plurality of candidate effects 62 and/or the control for effect intensity adjustment of the first effect may be presented in the first area 60 of the media content editing interface, and the preview image corresponding to the target effect is presented in the second area 61 of the media content editing interface. The target effect is a candidate effect currently in a selected state or an effect currently indicated by the control for effect intensity adjustment. The preview image corresponding to the target effect may be understood as an image obtained from processing the media resource to be processed by applying the target effect of the first effect.

It may be understood that the plurality of candidate effects 62 may correspond to different sub-models determined based on the currently determined effect style information and the effect keyword information of the first effect, and different effect sub-models may be determined by selecting different candidate effects.

The audio information of the media resource may be related information of audio of the media resource, such as the added background music, volume, or whether to play the original audio of the media resource.

In some implementations, the media resource to be processed may be obtained in the media resource obtaining interface. The media resource obtaining interface may include, for example, a capturing interface and/or a material uploading interface. Thus, the media resource to be processed may be captured in the capturing interface, and/or the media resource selected and/or uploaded by the current user in the material selection interface is used as the media resource to be processed. In response to an obtaining operation of the current user on the media resource, the current interface is switched from the media resource obtaining interface to the media content editing interface of the obtained media resource. At this time, before obtaining the media resource to be processed, the method further comprises: displaying a media resource obtaining interface comprising at least one of a capturing interface or a material uploading interface; displaying the media content editing interface of the media resource may comprise: displaying the media content editing interface of the media resources in response to an obtaining operation on the media resource obtaining interface. The obtaining operation may be understood as an operation for instructing to switch a media content editing interface of a media resource, such as a capturing completion operation or an operation for instructing the completion of selection or uploading of a media resource. It may be understood that, when the media resource obtaining interface is the capturing interface, the editing entry of the first effect may also be presented on the capturing interface, for example, to trigger the display of the style area and the description area, so that the user may re-adjust the first effect in the capturing interface.

S205: processing the media resource based on the first effect, and presenting the processed media resource in the media content editing interface.

In this embodiment, when the media content editing interface of the media resource is displayed, the media resource may be processed based on the first effect, and the processed media resource is presented in the media content editing interface. For example, a preview image of a media resource processed with a candidate effect of the first effect is presented in a second area of the media content editing interface.

In this embodiment, the execution order of S202-S205 is not limited. For example, the media resource may be obtained first, and when a triggering operation (such as an obtaining operation) of the user is received, the media content editing interface of the obtained media resource is displayed. Alternatively, the media resource may be obtained when a triggering operation (such as an obtaining operation) of the user is received, and the media content editing interface of the obtained media resource is displayed. And/or, the media resource may be processed by applying the first effect before, after, or at the same time as the media content editing interface of the obtained media resource is displayed, and the processed media resource is presented in the media content editing interface while the media content editing interface of the media resource is displayed or after the display of the media content editing interface of the media resource.

In some implementations, processing the media resource based on the first effect and displaying the processed media resource on the media content editing interface comprises: determining, in response to an adjustment operation on the effect adjustment information, a target effect obtained by processing the media resource based on the first effect; presenting a target effect corresponding to the media resource on the media content editing interface.

The adjustment operation may be a triggering operation for adjusting a processing effect of the first effect, for example, a triggering operation for adjusting the processing intensity of the first effect. The execution mode of the adjustment operation is not limited. Optionally, the adjustment operation on the image information comprises a selection operation on the plurality of candidate effects and/or a triggering operation on the control for effect intensity adjustment. For example, the adjustment operation may be an operation for triggering a candidate effect of the first effect, or an operation for adjusting a processing intensity currently indicated by the control for effect intensity adjustment, and the like. The target effect may be understood as the effect of the first effect that is adjusted to as indicated by the adjustment operation.

For example, when the adjustment operation for the effect adjustment information is received, the target effect obtained by processing the media resource based on the first effect corresponding to the adjustment operation may be determined. The target effect is presented on the media content editing interface. For example, the target effect is presented in the form of the candidate effect of the first effect in the first area of the media content editing interface, and/or the preview image corresponding to the target effect is presented in the second area of the media content editing interface.

In some implementations, after presenting the processed media resource on the media content editing interface, the method further comprises: switching the target effect in response to an effect switching operation on the media content editing interface, and switching the preview image presented in the second area according to a target effect being switched to.

The effect switching operation may be understood as a triggering operation for switching the current processing effect of the first effect. The triggering manner of the effect switching operation is not limited, and optionally, the effect switching operation comprises a click switching operation and/or a sliding switching operation.

Taking the plurality of candidate effects of the first effect presented in the first area of the media content editing interface as an example, the effect switching operation may comprise a click switching operation, which may be, for example, an operation for clicking a certain candidate effect presented in the first area. The effect switching operation may also comprise a sliding switching operation, for example, an operation for sliding in a predetermined direction in the first area or the second area of the media content editing interface. For example, the plurality of candidate effects of the first effect may be laterally arranged in the first area. In this case, the predetermined direction may be lateral direction. Therefore, when sliding is performed by the current user laterally in the first area, the candidate effects presented in the first area may be controlled to move along the sliding direction by the current user, and the candidate effect moved to the preset position in the first area is taken as the target effect. When sliding is performed by the current user laterally in the second area, the previous candidate effect or the next candidate effect of the target effect in the first area before sliding may be determined as the target effect.

Specifically, when an effect switching operation on the media content editing interface is received, the target effect may be switched based on the effect switching operation, and the preview image presented in the second area may be switched to the preview image corresponding to the target effect being switched to.

S206: posting, in response to a second posting operation for target media content, the target media content and the first effect in the current application, an image of the target media content obtained from processing that applies the first effect created by the current user.

In this embodiment, when the second posting operation for the target media content is received, the target media content and the first effect may be posted. The target media content may be generated based on a target effect in the media content editing interface, for example, generated by using the media resource processed based on the target effect. The second posting operation may be applied in the media content editing interface, or in a posting interface of the target media content.

In some implementations, after obtaining the media resource and displaying the media content editing interface of the media resource, the user may be further supported to re-modify and edit the generated first effect. In this case, after displaying the media content editing interface of the media resource, the method further comprises: in response to an effect editing operation on the media content editing interface: displaying the effect editing interface, or presenting in the media content editing interface an editing item of the first effect for editing the first effect; posting the target media content and the first effect comprises: posting the target media content and the edited first effect.

The effect editing operation may be an operation for indicating to edit the first effect, for example, a triggering operation for indicating the display of an effect editing interface of the first effect and/or an editing item for the first effect. The execution manner of the effect editing operation is not limited, and optionally, the media content editing interface further presents an effect editing control for triggering execution of the effect editing operation. For example, the effect editing operation may be performed by triggering an effect editing control presented in the media content editing interface. The presentation position of the effect editing control is not limited, for example, the effect editing control may be presented in the first area or the second area of the media content editing interface.

For example, when an effect editing operation on the media content editing interface is received, for example, when it is detected that the current user triggers the effect editing control 63 displayed in the media content editing interface (as shown in FIG. 6, an example in which the effect editing control is presented in the first area 60 in FIG. 6), an effect editing interface may be displayed, or an editing item of the first effect is presented in the media content editing interface, so that the current user modifies and edits the first effect. Therefore, the media resource may be processed based on the first effect modified and/or edited by the current user to obtain the target media content. When the second posting operation for the target media content is received, the target media content and the edited first effect are posted in the current application. For example, as shown in FIG. 6, the effect editing control 63 may be disposed in parallel with a plurality of candidate effects 62, and similar to the interaction of the plurality of candidate effects 62, the effect editing control 63 may be selected by clicking or sliding.

In this embodiment, the current user may edit the first effect in the effect editing interface or based on the editing item presented in the media content editing interface, for example, may edit the effect style information and/or the effect keyword information of the first effect. In this case, optionally, editing the first effect comprises editing effect style information and/or effect keyword information of the first effect.

According to the method for generating an effect provided by the embodiment, a user is supported to create an effect. The created effect is used to generate the media content, and the media content and the effect are posted. In this way, the generation manner of the media content and the posting manner of the effect can be enriched, and the personalized use requirement of the user during creation can be met.

According to the method, the apparatus, the electronic device and the storage medium for generating an effect provided by the embodiment of the disclosure, an effect editing interface is displayed. The effect editing interface comprises a style area for inputting effect style information and a description area for inputting at least one piece of effect keyword information. In response to an effect generation operation, a first effect is created and generated according to target effect style information and target effect keyword information, wherein the target effect style information is effect style information inputted by a current user in the style area, and the target effect keyword information is effect keyword information inputted by the current user in the description area. With the above technical solution in the embodiment of this disclosure, the user is supported to create an effect by inputting the effect style information and the effect keyword information. Thus, the creation ways of the effect can be enriched, the personalized use requirement of the user on the effect is met, and the media content authoring experience of the user is improved.

FIG. 7 is a structural block diagram of an apparatus for generating an effect according to an embodiment of the present disclosure. The apparatus may be implemented by software and/or hardware, and may be configured in an electronic device, and is typically configured in a mobile phone or a tablet computer. The apparatus may be adapted to create and post an effect by executing a method for an effect, for example, create and post an effect in a video-type application program. As shown in FIG. 7, the apparatus for generating an effect provided in this embodiment may comprise a first interface display module 701 and an effect generation module 702.

The first interface display module 701 is configured to display an effect editing interface comprising a style area for inputting effect style information and a description area for inputting at least one piece of effect keyword information.

The effect generation module 702 is configured to create and generate, in response to an effect generation operation, a first effect according to target effect style information and target effect keyword information,whrein the target effect style information is effect style information inputted by a current user in the style area, and the target effect keyword information is effect keyword information inputted by the current user in the description area.

According to the apparatus for generating an effect provided by the embodiment, an effect editing interface is displayed through the first interface display module. The effect editing interface comprises a style area for inputting effect style information and a description area for inputting at least one piece of effect keyword information. In response to an effect generation operation, a first effect is created and generated by the effect generation module according to target effect style information and target effect keyword information, wherein the target effect style information is effect style information inputted by a current user in the style area, and the target effect keyword information is effect keyword information inputted by the current user in the description area. With the above technical solution in the embodiment, the user is supported to create an effect by inputting the effect style information and the effect keyword information. Thus, the creation ways of the effect can be enriched, the personalized use requirement of the user on the effect is met, and the media content authoring experience of the user is improved.

In addition, the apparatus for generating an effect provided by the embodiment further comprises at least one of: a first posting module configured to, after creating and generating the first effect according to the target effect style information and the target effect keyword information, post the first effect in a current application in response to a first posting operation for the first effect; a second posting module configured to, after creating and generating the first effect according to the target effect style information and the target effect keyword information, post, in response to a second posting operation for target media content, the target media content and the first effect in the current application, wherein an image of the target media content is obtained from processing that applies the first effect created by the current user.

Furthermore, the apparatus for generating an effect provided by the embodiment further comprises: a source obtaining module configured to, before posting the target media content and the first effect in the current application in response to the second posting operation for the target media content, obtain a media resource to be processed; a second interface display module configured to display a media content editing interface of the media resource for editing image information and/or audio information of the media resource to obtain the target media content; a source presentation module configured to process the media resource based on the first effect, and present the processed media resource on the media content editing interface.

In the above solution, the image information comprises effect adjustment information generated when the image of the media resource is processed by applying the first effect, and the effect adjustment information comprises a plurality of candidate effects and/or a control for effect intensity adjustment.

In the above solution, the source presentation module is configured to: determine, in response to an adjustment operation on the effect adjustment information, a target effect obtained by processing the media resource based on the first effect; present the target effect corresponding to the media resource on the media content editing interface.

In the above solution, the adjustment operation on the image information may comprise a selection operation on the plurality of candidate effects and/or a triggering operation on the control for effect intensity adjustment.

In the above solution, the media content editing interface may comprise a first area for presenting the plurality of candidate effects and/or the control for effect intensity adjustment, and a second area for presenting a preview image corresponding to the target effect.

In the above solution, the plurality of candidate effects is presented in a form of thumbnails of the corresponding preview images.

Further, the apparatus for generating an effect provided by the embodiment further comprises: an effect switching module configured to, after presenting the processed media resource on the media content editing interface, switch the target effect in response to an effect switching operation on the media content editing interface, and switch the preview image presented in the second area based on a target effect being switched to.

In the above solution, the effect switching operation may comprise a click switching operation and/or a sliding switching operation.

Further, the apparatus for generating an effect provided by the embodiment further comprises: an effect editing module configured to, after displaying the media content editing interface of the media resource, in response to an effect editing operation on the media content editing interface: display the effect editing interface, or present in the media content editing interface an editing item of the first effect for editing the first effect; the second posting module may be configured to: post the target media content and the edited first effect.

In the above solution, editing the first effect may comprise editing effect style information and/or effect keyword information of the first effect.

In the above solution, the media content editing interface further presents an effect editing control for triggering execution of the effect editing operation.

Further, the apparatus for generating an effect provided by the embodiment further comprises: a third interface display module configured to, before obtaining the media resource to be processed, display a media resource obtaining interface comprising at least one of a capturing interface or a material uploading interface; the second interface display module configured to display the media content editing interface of the media resources in response to an obtaining operation on the media resource obtaining interface.

Further, the apparatus for generating an effect provided by the embodiment further comprises: an input area display module configured to, after displaying the effect editing interface, in response to an addition operation for effect keyword information on the effect editing interface, display an effect keyword input area for the current user to input effect keyword information; a first presentation module configured to additionally present, in response to an input completion operation, the effect keyword information inputted by the current user in the description area; or, an information obtaining module configured to, after displaying the effect editing interface, obtain effect keyword information in response to an input operation on an effect keyword input area in the effect editing interface; a second presentation module configured to additionally present the obtained effect keyword information in the description area.

Further, the apparatus for generating an effect provided by the embodiment further comprises: a content obtaining module configured to, before additionally presenting the effect keyword information inputted by the current user in the description area, obtain effect description content inputted by the current user in the keyword input area; a tokenization module configured to perform tokenization on the effect description content to obtain at least one piece of keyword information as the effect keyword information.

In the above solution, the tokenization module may be configured to: perform the tokenization on the effect description content based on semantic analysis; and/or perform the tokenization on the effect description content based on a preset separator.

In the above solution, the first presentation module and/or the second presentation module are/is configured to: additionally present the at least one piece of effect keyword information obtained based on the effect description content in the description area, and present the at least one piece of effect keyword information as in a selected state.

In the above solution, the first interface display module 701 may be configured to: display the effect editing interface in response to an effect creation operation for an effect creation entry, wherein the effect creation entry is presented in a capturing interface, a preset effect presentation interface for presenting effect information of at least one effect, or a detail interface of a second effect.

The apparatus for generating an effect provided by the embodiments of the present disclosure may perform the method for generating an effect provided by any embodiment of the present disclosure, and has functional modules and beneficial effects corresponding to the method for generating an effect. For technical details not described in detail in this embodiment, reference may be made to the method for generating an effect provided by any embodiment of the present disclosure.

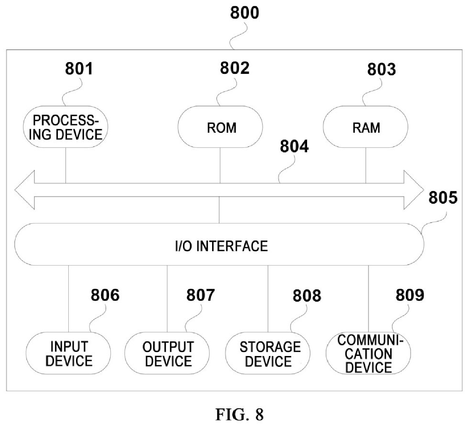

Reference is made to FIG. 8, which is a schematic structural diagram of an electronic device (for example, a terminal device) 800 suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an on-board terminal (for example, an on-board navigation terminal), and a fixed terminal such as a digital TV, a desktop computer, and the like. The electronic device shown in FIG. 8 is merely an example, and should not impose any limitation on the functions and scope of use of the embodiments of the present disclosure.

As shown in FIG. 8, the electronic device 800 may comprise a processing device (for example, a central processor, a graphics processor, etc.) 801, which may perform various appropriate actions and processes according to a program stored in a read-only memory (ROM) 802 or a programs loaded into a random access memory (RAM) 803 from a storage device 808. In the RAM 803, various programs and data required by the operation of the electronic device 800 are also stored. The processing device 801, the ROM 802, and the RAM 803 are connected to each other through a bus 804. Input/output (I/O) interface 805 is also connected to bus 804.

Generally, the following devices may be connected to the I/O interface 805: an input device 806 including, for example, a touch screen, a touchpad, a keyboard, a mouse, a camera, a microphone, an accelerometer, a gyroscope, etc. ; an output device 807 including, for example, a liquid crystal display (LCD), a speaker, a vibrator, etc. ; a storage device 808 including, for example, a magnetic tape, a hard disk, etc. ; and a communication device 809. The communication device 809 may allow the electronic device 800 to communicate wirelessly or wired with other devices to exchange data. While FIG. 8 shows an electronic device 800 with various devices, it should be understood that it is not required to implement or have all illustrated devices. Alternatively, more or fewer devices may be implemented or provided.

In particular, according to an embodiment of the present disclosure, the process described above with reference to the flowchart may be implemented as a computer software program. For example, the embodiments of the present disclosure comprise a computer program product comprising a computer program embodied on a non-transitory computer readable medium, the computer program comprising program code for performing the method shown in the flowchart. In such embodiments, the computer program may be downloaded and installed from the network through the communication device 809, or installed from the storage device 808, or installed from the ROM 802. The computer program, when executed by the processing device 801, performs the foregoing functions defined in the method of the embodiments of the present disclosure.

It should be noted that the computer-readable medium described above may be a computer readable signal medium, a computer readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of computer-readable storage medium may include, but not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus or device. The program code embodied on the computer-readable medium may be transmitted with any suitable medium, including, but not limited to, wires, optical cables, RF (radio frequency), and the like, or any suitable combination thereof.

In some implementations, the client and server may communicate using any currently known or future developed network protocol, such as HTTP (HyperText Transfer Protocol), and may be interconnected with any form or medium of digital data communication (e.g., a communication network). Examples of communication networks include local area networks ("LANs"), wide area networks ("WANs"), inter-networks (e.g., the Internet), and end-to-end networks (e.g., ad hoc end-to-end networks), as well as any currently known or future developed networks.

The above computer-readable medium may be included in the electronic device; or may be separately present without being assembled into the electronic device.

The above computer readable medium carries one or more programs which, when executed by the electronic device, cause the electronic device to: display an effect editing interface comprising a style area for inputting effect style information and a description area for inputting at least one piece of effect keyword information; create and generate, in response to an effect generation operation, a first effect according to target effect style information and target effect keyword information, the target effect style information being effect style information inputted by a current user in the style area, and the target effect keyword information being effect keyword information inputted by the current user in the description area.

Computer program code for performing the operations of the present disclosure may be written in one or more programming languages or a combination thereof, which include, but not limited to, object oriented programming languages such as Java, Smalltalk, C++, and conventional procedural programming languages, such as the "C" language or similar programming languages. The program code may execute entirely on a user's computer, partially on a user's computer, as a stand-alone software package, partially on a user's computer and partially on a remote computer, or entirely on a remote computer or server. In the case of a remote computer, the remote computer may be connected to the user's computer through any kind of network, including a local area network (LAN) or a wide area network (WAN), or may be connected to an external computer (e.g., connected through the Internet using an Internet service provider).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software or hardware. The name of a module does not constitute a limitation on the unit itself in some cases.

The functions described above may be performed, at least in part, by one or more hardware logic components. For example, without limitation, example types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses or devices, or any suitable combination of the foregoing. More specific examples of machine-readable storage media may include electrical connections based on one or more wires, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to one or more embodiments of the present disclosure, the example 1 provides a method for generating an effect, comprising:
displaying an effect editing interface comprising a style area for inputting effect style information and a description area for inputting at least one piece of effect keyword information;
creating and generating, in response to an effect generation operation, a first effect according to target effect style information and target effect keyword information, the target effect style information being effect style information inputted by a current user in the style area, and the target effect keyword information being effect keyword information inputted by the current user in the description area.

According to one or more embodiments of this disclosure, after creating and generating the first effect according to the target effect style information and the target effect keyword information, the method of example 2 according to example 1 further comprises at least one of:
posting the first effect in a current application in response to a first posting operation for the first effect;
posting, in response to a second posting operation for target media content, the target media content and the first effect in the current application, an image of the target media content obtained from processing that applies the first effect created by the current user.

According to one or more embodiments of this disclosure, before posting the target media content and the first effect in the current application in response to the second posting operation for the target media content, the method of claim 3 according to example 2 further comprises:
obtaining a media resource to be processed;
displaying a media content editing interface of the media resource for editing image information and/or audio information of the media resource to obtain the target media content;
processing the media resource based on the first effect, and presenting the processed media resource on the media content editing interface.

According to one or more embodiments of this disclosure, the method of example 4 according to example 3, wherein the image information comprises effect adjustment information generated when the image of the media resource is processed by applying the first effect, and the effect adjustment information comprises a plurality of candidate effects and/or a control for effect intensity adjustment.

According to one or more embodiments of this disclosure, the method of example 5 according to example 4, wherein processing the media resource based on the first effect and presenting the processed media resource on the media content editing interface comprises:
determining, in response to an adjustment operation on the effect adjustment information, a target effect obtained by processing the media resource based on the first effect;
presenting the target effect corresponding to the media resource on the media content editing interface.

According to one or more embodiments of this disclosure, the method of example 6 according to example 5, wherein the adjustment operation on the image information comprises a selection operation on the plurality of candidate effects and/or a triggering operation on the control for effect intensity adjustment.

According to one or more embodiments of this disclosure, the method of example 7 according to example 5, wherein the media content editing interface comprises a first area for presenting the plurality of candidate effects and/or the control for effect intensity adjustment, and a second area for presenting a preview image corresponding to the target effect.

According to one or more embodiments of this disclosure, the method of example 8 according to example 7, wherein the plurality of candidate effects is presented in a form of thumbnails of the corresponding preview images.

According to one or more embodiments of this disclosure, after presenting the processed media resource on the media content editing interface, the method of example 9 according to example 7 further comprises:
switching the target effect in response to an effect switching operation on the media content editing interface, and switching the preview image presented in the second area based on a target effect being switched to.

According to one or more embodiments of this disclosure, the method of example 10 according to example 9, wherein the effect switching operation comprises a click switching operation and/or a sliding switching operation.

According to one or more embodiments of this disclosure, after displaying the media content editing interface of the media resource, the method of example 11 according to example 3 further comprises:
in response to an effect editing operation on the media content editing interface: displaying the effect editing interface, or presenting in the media content editing interface an editing item of the first effect for editing the first effect;
posting the target media content and the first effect comprises:
   posting the target media content and the edited first effect.

According to one or more embodiments of this disclosure, the method of example 12 according to example 11, wherein editing the first effect comprises editing effect style information and/or effect keyword information of the first effect.

According to one or more embodiments of this disclosure, the method of example 13 according to example 11, wherein the media content editing interface further presents an effect editing control for triggering execution of the effect editing operation.

According to one or more embodiments of this disclosure, before obtaining the media resource to be processed, the method of example 14 according to example 3 further comprises:
displaying a media resource obtaining interface comprising at least one of a capturing interface or a material uploading interface;
displaying the media content editing interface of the media resource comprises:
   displaying the media content editing interface of the media resources in response to an obtaining operation on the media resource obtaining interface.

According to one or more embodiments of this disclosure, after displaying the effect editing interface, the method of example 15 according to any of examples 1-14 further comprises:
displaying, in response to an addition operation for effect keyword information on the effect editing interface, an effect keyword input area for the current user to input effect keyword information;
additionally presenting, in response to an input completion operation, the effect keyword information inputted by the current user in the description area;
or, after displaying the effect editing interface, the method further comprises:
   obtaining effect keyword information in response to an input operation on an effect keyword input area in the effect editing interface;
   additionally presenting the obtained effect keyword information in the description area.

According to one or more embodiments of this disclosure, before additionally presenting the effect keyword information inputted by the current user in the description area, the method of example 16 according to example 15 further comprises:
obtaining effect description content inputted by the current user in the keyword input area;
performing tokenization on the effect description content to obtain at least one piece of keyword information as the effect keyword information.

According to one or more embodiments of this disclosure, the method of example 17 according to example 16, wherein performing the tokenization on the effect description content comprises:
performing the tokenization on the effect description content based on semantic analysis; and/or
performing the tokenization on the effect description content based on a preset separator.

According to one or more embodiments of this disclosure, the method of example 18 according to example 16, wherein additionally presenting the obtained effect keyword information in the description area comprises:
additionally presenting the at least one piece of effect keyword information obtained based on the effect description content in the description area, and presenting the at least one piece of effect keyword information as in a selected state.

According to one or more embodiments of this disclosure, the method of example 19 according to any of examples 1-14, wherein displaying the effect editing interface comprises:
displaying the effect editing interface in response to an effect creation operation for an effect creation entry, the effect creation entry presented in a capturing interface, a preset effect presentation interface for presenting effect information of at least one effect, or a detail interface of a second effect.

According to one or more embodiments of this disclosure, the example 20 provices an apparatus for generating an effect, comprising:
a first interface display module configured to display an effect editing interface comprising a style area for inputting effect style information and a description area for inputting at least one piece of effect keyword information;
an effect generation module configured to create and generate, in response to an effect generation operation, a first effect according to target effect style information and target effect keyword information, the target effect style information being effect style information inputted by a current user in the style area, and the target effect keyword information being effect keyword information inputted by the current user in the description area.

According to one or more embodiments of this disclosure, the example 21 provides an electronic device, comprising:
one or more processors;
a memory storing one or more programs that, when executed by the one or more processors, enable the one or more processors to perform the method for generating an effect according to any of examples 1 to 19.

According to one or more embodiments of this disclosure, the example 22 provides a computer-readable storage medium storing computer instructions thereon, the instructions, when executed by a processor, to perform the method for generating an effect according to any of examples 1 to 19.

The above description is merely an illustration of the preferred embodiments of the present disclosure and the principles of the technology used herein. It should be understood by those skilled in the art that the disclosure in the present disclosure is not limited to the technical solutions of the specific combination of the above technical features, and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, it should not be understood to require that these operations be performed in the particular order shown or in sequential order. In certain circumstances, multitasking and parallel processing may be advantageous. Likewise, although several specific implementation details are included in the discussion above, these should not be construed as limiting the scope of the present disclosure. Some features described in the context of separate embodiments may also be implemented in combination in a single embodiment. Conversely, the various features described in the context of a single embodiment may also be implemented in multiple embodiments either individually or in any suitable subcombinations.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A method for generating an effect, comprising:
displaying an effect editing interface comprising a style area for inputting effect style information and a description area for inputting at least one piece of effect keyword information;
creating and generating, in response to an effect generation operation, a first effect according to target effect style information and target effect keyword information, the target effect style information being effect style information inputted by a current user in the style area, and the target effect keyword information being effect keyword information inputted by the current user in the description area.

2. The method according to claim 1, wherein after creating and generating the first effect according to the target effect style information and the target effect keyword information, the method further comprises at least one of:
posting the first effect in a current application in response to a first posting operation for the first effect;
posting, in response to a second posting operation for target media content, the target media content and the first effect in the current application, an image of the target media content obtained from processing that applies the first effect created by the current user.

3. The method according to claim 2, wherein before posting the target media content and the first effect in the current application in response to the second posting operation for the target media content, the method further comprises:
obtaining a media resource to be processed;
displaying a media content editing interface of the media resource for editing image information and/or audio information of the media resource to obtain the target media content;
processing the media resource based on the first effect, and presenting the processed media resource on the media content editing interface.

4. The method according to claim 3, wherein the image information comprises effect adjustment information generated when the image of the media resource is processed by applying the first effect, and the effect adjustment information comprises a plurality of candidate effects and/or a control for effect intensity adjustment.

5. The method according to claim 4, wherein processing the media resource based on the first effect and presenting the processed media resource on the media content editing page comprises:
determining, in response to an adjustment operation on the effect adjustment information, a target effect obtained by processing the media resource based on the first effect;
presenting a target effect corresponding to the media resource on the media content editing page.

6. The method according to claim 5, wherein the adjustment operation on the image information comprises a selection operation on the plurality of candidate effects and/or a triggering operation on the control for effect intensity adjustment.

7. The method according to claim 5, wherein the media content editing interface comprises a first area for presenting the plurality of candidate effects and/or the control for effect intensity adjustment, and a second area for presenting a preview image corresponding to the target effect.

8. The method according to claim 7, wherein the plurality of candidate effects is presented in a form of thumbnails of the corresponding preview images.

9. The method according to claim 7, wherein after presenting the processed media resource on the media content editing page, the method further comprises:
switching the target effect in response to an effect switching operation on the media content editing interface, and switching the preview image presented in the second area based on a target effect being switched to.

10. The method according to claim 9, wherein the effect switching operation comprises a click switching operation and/or a sliding switching operation.

11. The method according to claim 3, wherein after displaying the media content editing interface of the media resource, the method further comprises:
in response to an effect editing operation on the media content editing interface:
displaying the effect editing interface, or presenting in the media content editing interface an editing item of the first effect for editing the first effect;
posting the target media content and the first effect comprises:
posting the target media content and the edited first effect.

12. The method according to claim 11, wherein editing the first effect comprises editing effect style information and/or effect keyword information of the first effect.

13. The method according to claim 11, wherein the media content editing interface further presents an effect editing control for triggering execution of the effect editing operation.

14. The method according to claim 3, wherein before obtaining the media resource to be processed, the method further comprises:
displaying a media resource obtaining interface comprising at least one of a capturing interface or a material uploading interface;
displaying the media content editing interface of the media resource comprises:
displaying the media content editing interface of the media resources in response to an obtaining operation on the media resource obtaining interface.

15. The method according to any of claims 1 to14, wherein after displaying the effect editing interface, the method further comprises:
displaying, in response to an addition operation for effect keyword information on the effect editing interface, an effect keyword input area for the current user to input effect keyword information;
additionally presenting, in response to an input completion operation, the effect keyword information inputted by the current user in the description area;
or, after displaying the effect editing interface, the method further comprises:
obtaining effect keyword information in response to an input operation on an effect keyword input area in the effect editing interface;
additionally presenting the obtained effect keyword information in the description area.

16. The method according to claim 15, wherein before additionally presenting the effect keyword information inputted by the current user in the description area, the method further comprises:
obtaining effect description content inputted by the current user in the keyword input area;
performing tokenization on the effect description content to obtain at least one piece of keyword information as the effect keyword information.

17. The method according to claim 16, wherein performing the tokenization on the effect description content comprises:
performing the tokenization on the effect description content based on semantic analysis; and/or
performing the tokenization on the effect description content based on a preset separator.

18. The method according to claim 16, wherein additionally presenting the obtained effect keyword information in the description area comprises:
additionally presenting the at least one piece of effect keyword information obtained based on the effect description content in the description area, and presenting the at least one piece of effect keyword information as in a selected state.

19. The method according to any of claims 1 to 14, wherein displaying the effect editing interface comprises:
displaying the effect editing interface in response to an effect creation operation for an effect creation entry, the effect creation entry presented in a capturing interface, a preset effect presentation interface for presenting effect information of at least one effect, or a detail interface of a second effect.

20. An apparatus for generating an effect, comprising:
a first interface display module configured to display an effect editing interface comprising a style area for inputting effect style information and a description area for inputting at least one piece of effect keyword information;
an effect generation module configured to create and generate, in response to an effect generation operation, a first effect according to target effect style information and target effect keyword information, the target effect style information being effect style information inputted by a current user in the style area, and the target effect keyword information being effect keyword information inputted by the current user in the description area.

21. An electronic device, comprising:
at least one processor; and
a memory communicatively connected to the at least one processor; wherein,
the memory stores a computer program executable by the at least one processor, and the computer program is executed by the at least one processor to enable the at least one processor to perform the method for generating an effect according to any of claims 1 to 19.

22. A computer-readable storage medium storing computer instructions for causing a processor to perform the method for generating an effect according to any of claims 1 to 19.

23. A computer program product tangibly stored in a computer storage medium and comprising computer-executable instructions that, when executed by a device, cause the device to perform the method according to any of claims 1 to 19.
